# EUROPÄISCHE PATENTSCHRIFT

(11) **EP 1 504 967 B1**
(45) Veröffentlichungstag und Bekanntmachung des Hinweises auf die Patenterteilung: **26.07.2006**
(21) Anmeldenummer: 04018335.2
(22) Anmeldetag: 03.08.2004
(51) Int. Cl.: B60R 19/48

(54) **Einstellbarer Sensorhalter**
Adjustable sensor support
Support réglable pour un capteur

(30) Priorität: 08.08.2003 DE 10336358
(43) Veröffentlichungstag der Anmeldung: 09.02.2005
(73) Patentinhaber: Plastal GmbH, 91781 Weissenburg (DE)
(72) Erfinder: Meder, Stefan, 91781 Weissenburg (DE); Wurzer, Heinz, 91781 Weissenburg (DE)
(74) Vertreter: Scherzberg, Andreas Hans

(56) Entgegenhaltungen:
- GB-A- 2 349 469
- US-A- 5 743 618
- US-B1- 6 227 501
- US-B1- 6 322 275
- PATENT ABSTRACTS OF JAPAN Bd. 1998, Nr. 10, 31. August 1998 (1998-08-31) -& JP 10 123248 A (MITSUBISHI MOTORS CORP), 15. Mai 1998 (1998-05-15)

## Beschreibung

Die Erfindung betrifft einen einstellbaren Sensorhalter zur Befestigung eines Sensors an einem Kunststoffaußenteil eines Kraftfahrzeugs.

Sensoren, insbesondere Einparksensoren, werden in Kunststoffaußenteilen wie z. B. Stoßfängerüberzüge eingebaut. Da diese Sensoren auf dem Prinzip der Ultraschallmessung beruhen, dürfen sie nicht von dem Kunststoffaußenteil abgedeckt werden.

Stand der Technik ist es, die Sensoren in einen Sensorhalter einzubauen und den Sensorhalter am Kunststoffaußenteil durch Verschweißen, Verkleben oder Anformung zu befestigen. Ein derartiger Sensorhalter ist aus der US 6 227 501 A gemäß Oberbegriff des Anspruchs 1 bekannt.

Bei einer Befestigung des Sensorhalters in einem zusätzlichen Befestigungsteil wie z. B. Schutzleisten, Kühlerschutzgitter oder Kennzeichenblenden treten Probleme auf, da bei einem Austausch dieser, z. B. im Reparaturfall, die Befestigungsteile nur inklusive des Sensorhalters und des Sensors demontiert werden können.

Diese Demontage ist außerdem mit erheblichen Qualitätsproblemen behaftet (Beschädigung der Sensoren, Lackbeschädigungen), so dass eine mehrmalige beschädigungsfreie Montage und Demontage nicht möglich ist. Des weiteren kann eine Befestigung am Kühlerschutzgitter im Bereich der Kennzeichenblende nicht umgesetzt werden, da der Sensor die Montage oder Demontage behindert. Außerdem sind diese Sensoren, da sie sich nicht z. B. Stauchen oder Deformieren lassen, einem Fußgängerschutz hinderlich.

Der Erfindung liegt daher die Aufgabe zu Grunde, einen einstellbaren Sensorhalter nach dem Oberbegriff des Anspruchs 1 so zu verbessern, dass der Sensor eine Montage oder Demontage eines zusätzlichen Befestigungsteils an einem Kunststoffaußenteil nicht behindert. Außerdem soll zugleich der Fußgängerschutz verbessert werden.

Erfindungsgemäß wird diese Aufgabe dadurch gelöst, dass auf der Außenfläche des Sonsorhalters senkrecht zur Sensorachse eine Drehachse angeordnet ist, dass der Sensorhalter über die Drehachse in einer entsprechenden Ausnehmung des Kunststoffaußenteils vertikal drehbar befestigt ist und dass auf der Außenfläche des Sensorhalters Verrastungspunkte angeordnet sind, in denen das Kunststoffaußenteil einrastet und wodurch sich die vertikale Ausrichtung des Sensorhalters einstellen lässt.

Durch die vertikal schwenkbare Halterung des Sensorhalters kann die Sensorhalterung zum Befestigen eines Befestigungsteils verschwendet werden, wodurch er die Montage oder Demontage dieses Befestigungsteils nicht behindert.

Außerdem kann der Sensorhalter bei einem Unfall wegschwenken, so dass zugleich der Fußgängerschutz verbessert ist.

Vorteilhafterweise ist die Drehachse durch Stifte gebildet. Diese sind diametral gegenüberliegend auf dem Außenumfang des Sensors angeordnet und werden in eine entsprechende Ausnehmung des Kunststoffaußenteils vertikal drehbar befestigt, bevorzugt eingeklippst.

Zur Befestigung des Sensorhalters in einer gewünschten vertikalen Ausrichtung sind erfindungsgemäß auf der Außenfläche des Sensorhalters Verrastungspunkte angeordnet, wie beschrieben. Diese Verrastungspunkte sind in bevorzugter Ausführungsform Einkerbungen auf dem Sensorhalter oder auf einer Verdickung auf dem Sensorhalter. Zwei Einkerbungen reichen in der Regel aus.

Damit bei einem Unfall der Sensorhalter besser wegschwenken kann, ist der Sensorhalter bevorzugt an seinem zum Kraftfahrzeug gewandten Ende einer zur Längsachse des Sensorhalters geneigten Schräge benachbart angeordnet.

Das zur Schräge weisende Ende des Sensorhalters weist bevorzugt eine zur Schräge korrespondierende Fläche auf. Auf dieser Fläche kann bei einem Unfall der Sensorhalter abgleiten. Bei einem Unfall würde der Sensorhalter aus seiner Befestigung im Kunststoffaußenteil ausbrechen und durch die Schräge abgleiten, so dass insbesondere der Fußgängerschutz verbessert ist.

Bevorzugt wird dieser erfindungsgemäße Sensorhalter in Schutzleisten oder Kennzeichenblenden von Kraftfahrzeugen verwendet.

Die Erfindung wird an Hand der nachfolgend genannten Figuren näher beschrieben.

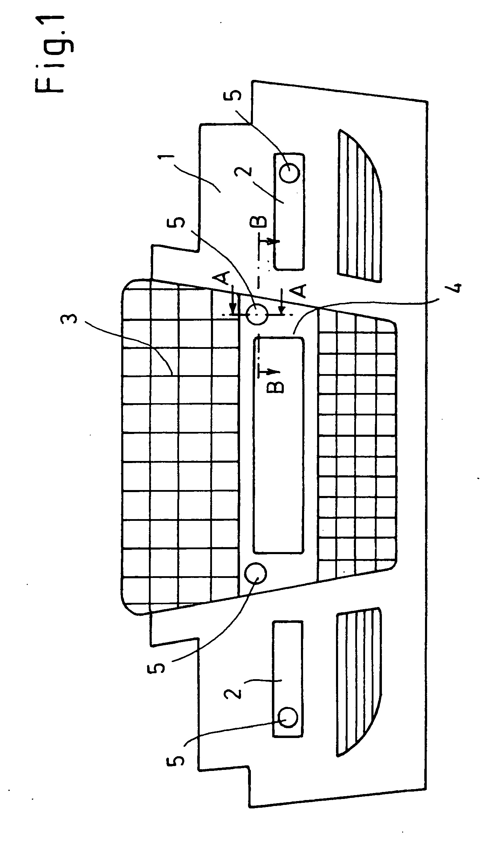

Fig. 1 zeigt den Stoßfängerüberzug 1 eines Kunststoffaußenteils eines Kraftfahrzeugs. Mit dem Bezugszeichen 2 ist eine Schutzleiste bezeichnet, die am Stoßfängerüberzug 1 befestig ist. In dieser Schutzleiste 2 ist ein Sensor 5 als funktionale Einheit eingesetzt. Zwischen den Schutzleisten 2 befindet sich ein Kühlerschutzgitter 3, in dem eine Kennzeichenblende 4 und weitere Sensoren 5 eingesetzt sind.

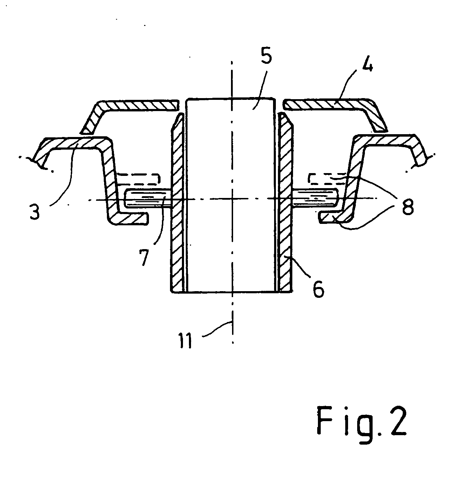

Figur 2 zeigt einen Schnitt B-B nach Fig. 1. In das Kühlerschutzgitter 3 ist ein Sensorhalter 6 mit einem Sensor 5 eingeklippst (bzw. eingesetzt). Auf dem Außenumfang des Sensorhalters 6 ist eine Drehachse 7 angeordnet. Diese Drehachse 7 ist aus zwei diametral gegenüberliegenden Stiften gebildet. Zum Einklippsen bzw. Einsetzen des Sensorhalters 6 in das Kühlerschutzgitter 3 ist an diesem als Ausnehmung eine entsprechende Eingreifhalterung 8 vorgesehen. In dieser Eingreifhalterung 8 ist die Sensorhalterung 6 über die Drehachse 7 vertikal drehbar eingesetzt. Auf dem Kühlerschutzgitter 3 ist eine Kennzeichenblende 4 angebracht, die vom Sensor 5 durchragt ist. Diese Kennzeichenblende 4 lässt sich durch die vertikale Bewegbarkeit des Sensors 5 bzw. des Sensorhalters 6 leicht montieren oder demontieren.

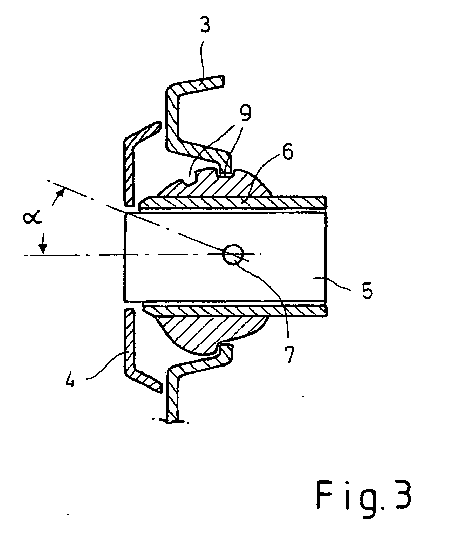

Fig. 3 zeigt einen Schnitt A-A nach Fig. 1. Gleiche Teile sind mit demselben Bezugszeichen wie in den Figuren 1 und 2 bezeichnet. Zur Arretierung der vertikalen Ausrichtung des Sensorhalters 6 bzw. des Sensors 5 sind auf der Außenseite bzw. dem Außenumfang des Sensorhalters 6 Verrastungspunkte 9 angeordnet. Diese Verrastungspunkte 9 sind Einkerbungen auf dem Sensorhalter 6 bzw. auf einer Verdickung auf dem Sensorhalter 6. Der Winkel α zeigt den Drehwinkel des Sensorhalters 6 an.

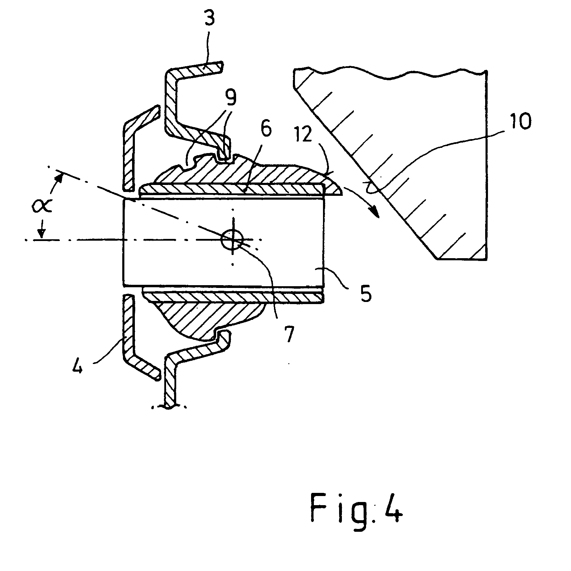

Fig. 4 zeigt eine Ausführungsform mit einem verbesserten Fußgängerschutz. Bei einem Unfall würde die Kennzeichenblende 4 mitsamt dem Sensorhalter 6 bzw. dem Sensor 5 in Richtung Kraftfahrzeug beschleunigt werden. Von Vorteil ist hierbei die Aufhängung des Sensorhalters 6 auf einer Drehachse, so dass sich der Sensorhalter 6 wegdrehen kann. Um dieses Wegdrehen zu erleichtern, ist bevorzugt der Sensorhalter 6 an seinem zum Kraftfahrzeug gewandten Ende einer zur Längsachse des Sensorhalters 6 geneigten Schräge 10 benachbart angeordnet. Zusätzlich weist das zur Schräge weisende Ende des Sensorhalters 6 eine der Schräge 10 korrespondierende Fläche 12 auf.

Besonders erfolgreich lässt sich dieser erfindungsgemäße Sensorhalter in Schutzleisten oder Kennzeichenblenden von Kraftfahrzeugen verwenden.

## Patentansprüche

1. Einstellbarer Sensorhalter (6) zur Befestigung eines Sensors (5) an einem Kunststoffaußenteil eines Kraftfahrzeugs, wobei
auf der Außenfläche des Sensorhalters (6) senkrecht zur Sensorachse (11) eine Drehachse (7) angeordnet ist,
der Sensorhalter (6) über die Drehachse (7) in einer entsprechenden Ausnehmung des Kunststoffaußenteils vertikal drehbar befestigt ist und
**dadurch gekennzeichnet,**
- **dass** auf der Außenfläche des Sensorhalters (6) Verrastungspunkte (9) angeordnet sind, in denen das Kunststoffaußenteil einrastet und wodurch sich die vertikale Ausrichtung des Sensorhalters (6) einstellen lässt.

2. Sensorhalter nach Anspruch 1, **dadurch gekennzeichnet, dass** die Drehachse (7) durch Stifte gebildet ist.

3. Sensorhalter nach Anspruch 1 oder 2, **dadurch gekennzeichnet, dass** die Verrastungspunkte (9) Einkerbungen auf dem Sensorhalter (6) oder auf einer Verdickung auf dem Sensorhalter (6) sind.

4. Sensorhalter nach einem der Ansprüche 1 bis 3, **dadurch gekennzeichnet, dass** der Sensorhalter (6) an seinem zum Kraftfahrzeug gewandten Ende einer zur Längsachse des Sensorhalters geneigten Schräge (10) benachbart ist.

5. Sensorhalter nach Anspruch 4, **dadurch gekennzeichnet, dass** das zur Schräge (10) weisende Ende des Sensorhalters (6) eine der Schräge (10) korrespondierende Fläche (12) aufweist.

6. Sensorhalter nach einem der Ansprüche 1 bis 5 zur Verwendung in Schutzleisten (2) oder Kennzeichenblenden (4) von Kraftfahrzeugen.

## Claims

1. An adjustable sensor holder (6) for securing a sensor (5) to an outer plastics portion of a motor vehicle, wherein
a rotational axis (7) is provided on the outer surface of the sensor holder (6) perpendicularly in relation to the sensor axis (11),
the sensor holder (6) is secured by way of the rotational axis (7) in a corresponding recess of the outer plastics portion in such a way that it is vertically rotatable, and
**characterised in that** provided on the outer surface of the sensor holder (6) there are latching points (9) in which the outer plastics portion engages and by means of which vertical alignment of the sensor holder (6) can be adjusted.

2. A sensor holder according to claim 1, **characterised in that** the rotational axis (7) is formed by pins.

3. A sensor holder according to claim 1 or 2, **characterised in that** the latching points (9) are notches on the sensor holder (6) or on a thickened portion on the sensor holder (6).

4. A sensor holder according to one of claims 1 to 3, **characterised in that** the sensor holder (6) at its end facing the motor vehicle is adjacent to a slope (10) that is inclined in relation to the longitudinal axis of the sensor holder.

5. A sensor holder according to claim 4, **characterised in that** the end of the sensor holder (6) pointing towards the slope (10) has a surface (12) that corresponds to the slope (10).

6. A sensor holder according to one of claims 1 to 5 for use in protective strips (2) or license-plate covers (4) of motor vehicles.

## Revendications

1. Support réglable (6) pour fixer un capteur (5) sur une partie externe en matière plastique d'un véhicule automobile, avec sur la surface externe du support (6) un axe de rotation (7) perpendiculaire à l'axe (11) du capteur et par lequel celui-ci est fixé verticalement en rotation dans un évidement correspondant de la partie externe en matière plastique, **caractérisé en ce que** sur la surface externe du support de capteur (6) sont prévus des points d'arrêt dans lesquels la partie externe en matière plastique est bloquée et par lesquels l'orientation verticale du support de capteur (6) peut être réglée.

2. Support de capteur selon la revendication 1, **caractérisé en ce que** l'axe de rotation (7) est constitué par des tiges.

3. Support de capteur selon la revendication 1 ou 2, **caractérisé en ce que** les points d'arrêt (9) sont constitués par des encoches creusées dans le support de capteur (6) ou dans une surépaisseur réalisée sur ce capteur .

4. Support de capteur selon une des revendications 1 à 3, **caractérisé en ce que** le support de capteur (6), à son extrémité tournée vers le véhicule, est proche d'une surface en pente (10) inclinée par rapport à l'axe longitudinal du capteur.

5. Support de capteur selon la revendication 4, **caractérisé en ce que** l'extrémité du support de capteur (6) située en face de la pente (10) présente une surface (12) en correspondance avec cette pente.

6. Support de capteur selon une des revendications 1 à 5, pour être utilisé dans des barrettes de protection (2) ou des plaques d'immatriculation (4) de véhicules automobiles.
